**Europäisches Patentamt**

**European Patent Office**

**Office européen des brevets**

(19)

(11) Veröffentlichungsnummer : **0 332 812 B1**

(12) **EUROPÄISCHE PATENTSCHRIFT**

(45) Veröffentlichungstag der Patentschrift :
**17.07.91 Patentblatt 91/29**

(51) Int. Cl.⁵ : **B60J 7/12**

(21) Anmeldenummer : **89100916.9**

(22) Anmeldetag : **20.01.89**

(54) **Versenkbares Faltverdeck eines Kraftfahrzeugs.**

(30) Priorität : **17.03.88 DE 3808911**

(43) Veröffentlichungstag der Anmeldung :
**20.09.89 Patentblatt 89/38**

(45) Bekanntmachung des Hinweises auf die
Patenterteilung :
**17.07.91 Patentblatt 91/29**

(84) Benannte Vertragsstaaten :
**DE ES FR GB IT**

(56) Entgegenhaltungen :
**EP-A- 0 246 201**
**DE-A- 3 416 330**
**US-A- 4 784 428**

(73) Patentinhaber : **Bayerische Motoren Werke**
**Aktiengesellschaft**
**Patentabteilung AJ-30 Postfach 40 02 40**
**Petuelring 130**
**W-8000 München 40 (DE)**

(72) Erfinder : **Ball, Wilfried**
**Breslauer Strasse 24**
**W-8312 Dingolfing (DE)**
Erfinder : **König, Johann**
**Bulachstrasse 33**
**W-8066 Günding (DE)**

EP 0 332 812 B1

## Beschreibung

Die Erfindung bezieht sich auf ein versenkbares Faltverdeck eines Kraftfahrzeugs, mit den im Oberbegriff des Hauptanspruchs angegebenen Merkmalen.

Ein derartiges Faltverdeck ist bereits aus der DE-A 34 16 330 bekannt, das in einer Hecköffnung eine mit dem Faltverdeck fest verbundene Heckscheibe aufweist. Die aus Glas gefertigte Heckscheibe kann bis in die Seitenbereiche des Faltverdecks verlaufen. Die Heckscheibe ist an beiden Seiten von je einer Stützstrebe gestützt, die in Schließstellung ein Spannen des Faltverdecks bewirken. Bei Nichtgebrauch wird das Faltverdeck zusammen mit der Heckscheibe in ein hinteres Aufnahmefach eingebracht, in das die Heckscheibe über die Stützstreben zwangsweise nahezu einschwenkt. Besonders nachteilig ist, daß die Heckscheibe in Schließstellung nicht ausreichend festgehalten ist. Beim Überfahren von Fahrbahnunebenheiten kann die Heckscheibe um die Anlenkstellen der Stützstreben Kippbewegungen ausführen, die Geräusche und nach einiger Zeit ein Nachlassen der Spannung des Faltverdecks bewirken. Das Faltverdeck wird über die Heckscheibe gespannt, wodurch sich diese entsprechend verformt. Aufgrund von Fertigungstoleranzen und Windbelastungen wird die Heckscheibe ebenfalls verspannt, so daß sie bereits bei geringen Zusatzbelastungen brechen kann.

Aus der EP-A-0 246 201 ist ein Faltverdeck mit einer Heckscheibe aus Glas bekannt, die in Schließstellung des Faltverdecks vor eine Hecköffnung im Faltverdeck geschwenkt von innen an dem Randbereich der Hecköffnung anliegt. Die Heckscheibe ist an dem Steg eines schwenkbaren Spannbügels schwenkbar angelenkt. Am oberen Randbereich der Heckscheibe sind mit einem vorderen Querspriegel verbundene Gurte befestigt, die beim Schließen des Faltverdecks gespannt werden und dadurch die Heckscheibe vor die Hecköffnung verlagern. Bei Nichtgebrauch wird das Faltverdeck zusammen mit den beiden hinteren Seitenfenstern in ein hinteres Aufnahmefach eingebracht, in das zuerst die Heckscheibe einschwenkt. Ein wesentlicher Nachteil ist darin zu sehen, daß die Heckscheibe durch die Gurte nicht ausreichend festgehalten ist. Beispielsweise beim Überfahren von Fahrbahnunebenheiten werden die Gurte durch vertikale Bewegungen der Heckscheibe gedehnt. Nach einiger Zeit liegt deshalb die Heckscheibe in Schließstellung des Faltverdecks nicht mehr dicht an dem inneren Randbereich der Hecköffnung an, so daß Feuchtigkeit in das Fahrzeuginnere eindringen kann.

Der Erfindung liegt die Aufgabe zugrunde, ein versenkbares Faltverdeck eines Kraftfahrzeugs nach dem Oberbegriff des Hauptanspruchs anzugeben, das auch eine große und gekrümmte Heckscheibe aus Glas aufweisen kann, die nur gering belastet und in Schließstellung des Faltverdecks lagegenau festgehalten ist.

Diese Aufgabe ist durch die im Kennzeichen des Hauptanspruchs angegebenen Merkmale gelöst. Besonders vorteilhaft ist, daß der Querbügel die von dem Faltverdeck gelöste Heckscheibe in Schließstellung des Faltverdecks an den inneren Randbereich der Hecköffnung andrückt, ohne die Heckscheibe zu verspannen. Der verhältnismäßig steife, mit dem Verdeckgestänge fest verbundene Querbügel verhindert vertikale Bewegungen der Heckscheibe nach unten auch beim Überfahren von Fahrbahnunebenheiten. Damit die Heckscheibe keine Bewegungen nach oben ausführen kann, ist lediglich die Anpreßkraft der Heckscheibe entsprechend festzulegen. Ein festes Anlegen der schwenkbaren Heckscheibe an dem Querbügel und an dem Faltverdeck kann bereits mit einer geringen Anpreßkraft erreicht werden, die auch sicherstellt, daß keine Feuchtigkeit durch die Hecköffnung in das Fahrzeuginnere eindringt. Die Heckscheibe kann beispielsweise aus Glas gefertigt und mit Heizdrähten versehen sein. Darüber hinaus kann die Heckscheibe eine gekrümmte Form und eine den Heckscheiben von Fahrzeugen ohne Faltverdeck entsprechende Größe aufweisen. Ist das Faltverdeck mit einer heizbaren Heckscheibe aus Glas versehen, so ist die Sicht nach rückwärts auch bei ungünstigen Witterungsverhältnissen nicht beeinträchtigt, wobei im Bedarfsfall die Heckscheibenheizung einzuschalten ist.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen

Fig. 1    einen vertikalen Längsschnitt durch die Heckscheibe eines Kraftfahrzeugs mit Faltverdeck,

Fig. 2    den linken hinten Bereich der Heckscheibe in Draufsicht,

Fig. 3    ein vergrößerter Ausschnitt des Bereiches III in Fig. 1,

Fig. 4    eine vergrößerte Darstellung des hinteren unteren Bereiches der Heckscheibe in einer Fig. 1 entsprechenden Ansicht,

Fig. 5    die an einem Spannbügel schwenkbar befestigte Heckscheibe in Schließstellung des Faltverdecks und in einer hochgeschwenkten Stellung des Spannbügels und

Fig. 6    die aus der hochgeschwenkten Stellung des Spannbügels in den hinteren Aufnahmeraum eingeschwenkte Heckscheibe.

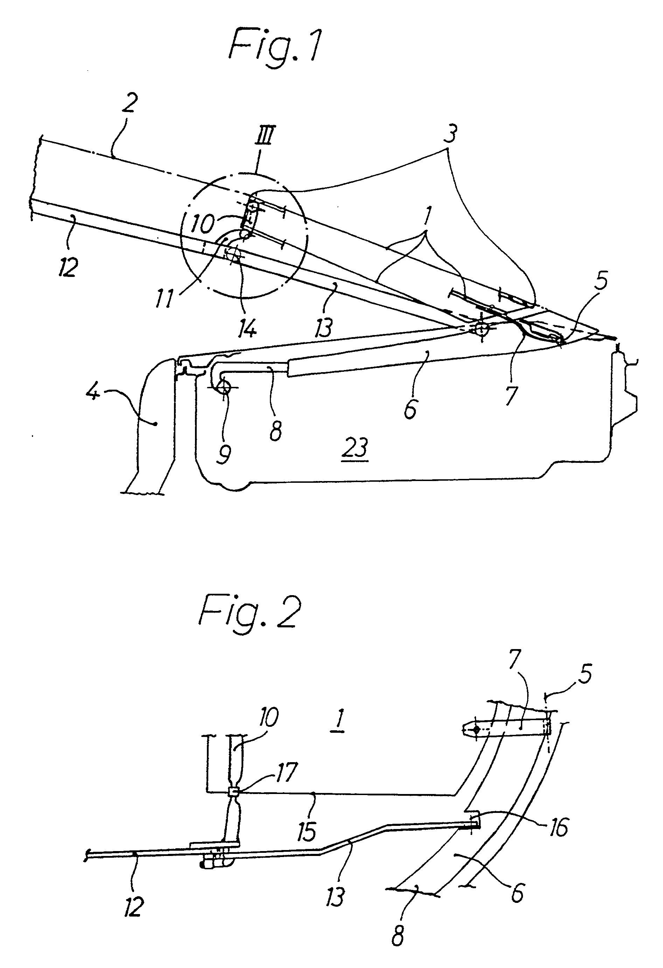

Die in Fig. 1 in einem vertikalen Längsschnitt dargestellte Heckscheibe 1 eines Kraftfahrzeugs mit Faltverdeck ist einer Hecköffnung 3 des Faltverdecks 2 zugeordnet. Das Faltverdeck 2 kann mit seinem Verdeckgestänge und der separat angeordneten Heckscheibe 1 vollständig in ein hinter den Fondsitzen 4 befindliches Aufnahmefach 23 eingebracht werden. In der dargestellten Schließstellung des Faltverdecks 2 ist die Heckscheibe 1 vor die Hecköffnung 3 geschwenkt und liegt an dem Randbereich der Hecköffnung 3 von innen an.

Bei dem Ausführungsbeispiel ist die Heckscheibe 1 in ihrem hinteren unteren Bereich um eine Querachse 5 schwenkbar, die in Stegbereich eines U-förmigen Spannbügels 6 ausgebildet ist. Hierzu sind am hinteren unteren Bereich der Heckscheibe 1 mit seitlichem Abstand nebeneinander zwei Tragarme 7 befestigt, die an ihren vorstehenden Enden schwenkbar an der Querachse 5 gelagert sind. Der mit dem hinteren unteren Bereich des Faltverdecks 2 verbundene Spannbügel 6, der das Faltverdeck 2 in Schließstellung spannt, ist in den Endbereichen seiner in Schließstellung nach vorne gerichteten Schenkeln 8 um eine karosseriefeste Achse 9 nach oben schwenkbar, die in Querrichtung des Fahrzeugs verläuft. In der dargestellten Schließstellung ist der vordere obere Bereich der Heckscheibe 1 von einem Querbügel 10 gegen den inneren Randbereich der Hecköffnung 3 belastet. Der Querbügel 10 ist bei dem Ausführungsbeispiel in Querrichtung an die Kontur der gekrümmten Heckscheibe 1 aus Glas angepaßt und liegt über einen Rahmen der Heckscheibe 1 an dieser von innen an. In Schließstellung des Faltverdecks 2 ist somit die Heckscheibe 1 über annähernd ihre gesamte Breite von dem Querbügel 10 gestützt. Die beiden seitlichen Enden des Querbügels 10 sind bei der beschriebenen Ausführung jeweils über ein Verbindungsstück 11 an dem hinteren Bereich einer vorderen Spannstange 12 befestigt. Jeweils die an einer Fahrzeugseite vorgesehene vordere Spannstange 12 ist mit einer hinteren Spannstange 13 in einem Gelenk 14 um eine Querachse schwenkbar verbunden. Jeweils die vordere und hintere Spannstange 12, 13 bilden einen Übertotpunktmechanismus, über den das Faltverdeck 2 nach außen belastet wird.

Das Faltverdeck und sein Verdeckgestänge, sowie die Heckscheibe und der Spannbügel sind symmetrisch zur Fahrzeuglängsachse ausgebildet. In Fig. 2 ist der linke Bereich der Heckscheibe 1 in Draufsicht dargestellt. Wie Fig. 2 aufgrund der Symmetrie zur Längsachse entnommen werden kann, weisen jeweils die seitlich gegenüberliegenden vorderen und hinteren Spannstangen 12, 13, sowie die beiden Schenkel 8 im Schwenkbereich der Heckscheibe 1 einen größeren seitlichen Abstand als die seitlichen Ränder 15 der Heckscheibe 1 auf. Jeweils das hintere Ende der hinteren Spannstange 13 ist um eine im Stegbereich des Spannbügels 6 quer verlaufende Drehachse 16 schwenkbar mit dem Spannbügel 6 verbunden. In den beiden Seitenbereichen der Heckscheibe 1 ist jeweils eine Rolle 17 beispielsweise aus Kunststoff um etwa eine Querachse drehbar auf dem Querbügel angeordnet. Beim Einfahren des Faltverdecks wird der Querbügel nach unten verlagert und verschwenkt. Die gleichzeitig mit ihren Tragarmen 7 um die Querachse 5 in das Aufnahmefach einschwenkende Heckscheibe 1 liegt unter ihrer Schwerkraft an den Rollen 17 an, die eine Beschädigung der Heckscheibe 1 beim Einbringen in das Aufnahmefach verhindern.

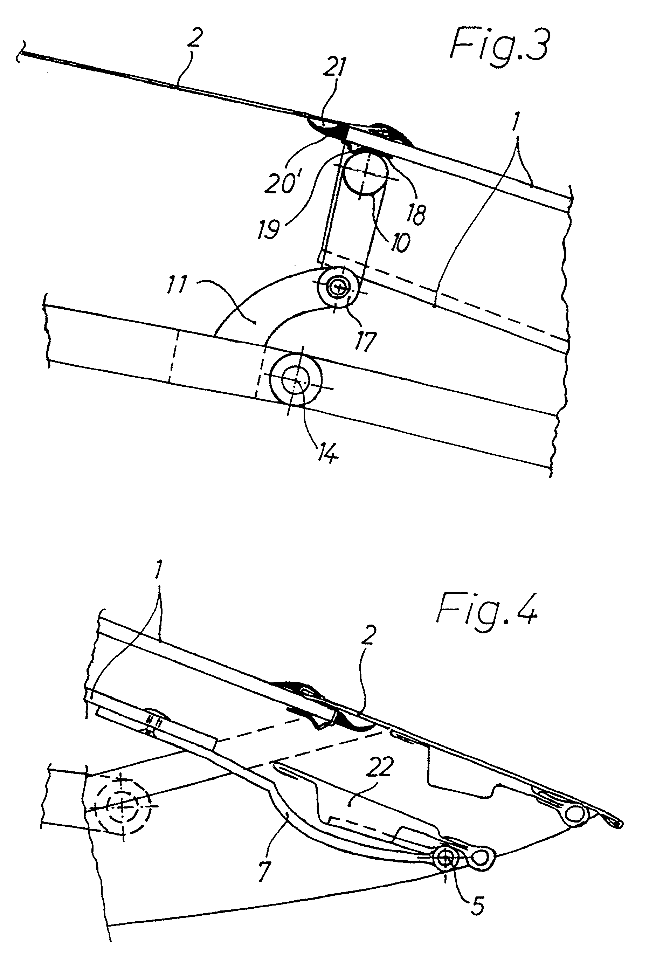

In Fig. 3 ist der durch den strichpunktierten Kreis III in Fig. 1 gekennzeichnete Bereich vergrößert dargestellt. Der Querbügel 10 ist in der dargestellten Schließstellung des Faltverdecks 2 in einer in Querrichtung etwa senkrecht zur Heckscheibe 1 verlaufenden Ebene angeordnet. Jeweils das Gelenk 14 der vorderen und hinteren Spannstange 12, 13 ist bei dem Ausführungsbeispiel unterhalb der Heckscheibe 1 vor der Ebene des Querbügels angeordnet. Das Gelenk 14 könnte aber auch in der Ebene oder etwas hinter der Ebene liegen, wobei in dem letztgenannten Fall der Rahmen 18 der Heckscheibe 1 so breit auszubilden ist, daß der Querbügel 10 beim Verschwenken nicht direkt an der Heckscheibe 1 anliegt und die Heckscheibe 1 beschädigt. An dem Rahmen 18 ist eine nach innen vorstehende elastische Zunge 19 ausgebildet, die in Schließstellung des Faltverdecks 2 im vorderen oberen Bereich an dem Querbügel 10 anliegt und eine Arretierung des Querbügels 10 bewirkt. Bei dem Ausführungsbeispiel ist mit dem Rand der Hecköffnung eine äußere und mit dem Rahmen 18 der Heckscheibe 1 eine innere, jeweils umlaufende Dichtlippe 20, 20' verbunden, die elastisch sind. Die äußere Dichtlippe 20 an dem Rand der Hecköffnung wirkt von außen mit der Heckscheibe 1 zusammen, während die innere Dichtlippe 20' an dem Rahmen 18 von innen an dem Stoff des Faltverdecks 2 anliegt. Die innere Dichtlippe 20' weist einen oben offenen Wasserablaufkanal 21 auf.

Der hintere untere Bereich der Heckscheibe 1 ist in Fig. 4 in einem vertikalen Längsschnitt vergrößert dargestellt. Die an der Heckscheibe befestigten Tragarme 7 sind bei dem Ausführungsbeispiel stromleitend ausgebildet. Die Heckscheibe 1 aus Glas ist mit Heizdrähten versehen, die im Heizbetrieb auch bei ungünstigen Witterungsverhältnissen Feuchtigkeitsniederschläge auf der Heckscheibe 1 vermeiden oder beseitigen. Hierzu bilden die stromleitenden Tragarme 7 mit den Heizdrähten der Heckscheibe 1 und der Spannungsquelle des Fahrzeugs einen Stromkreis, der über einen Schalter ein- und auszuschalten ist. Bei dem Ausführungsbeispiel erfolgt die elektrische Verbindung der Spannungsquelle mit den Tragarmen 7 über schwenkbare Kontaktschalter 22, die in Schließstellung des Faltverdecks 2 an den stromleitenden Tragarmen 7 anliegen.

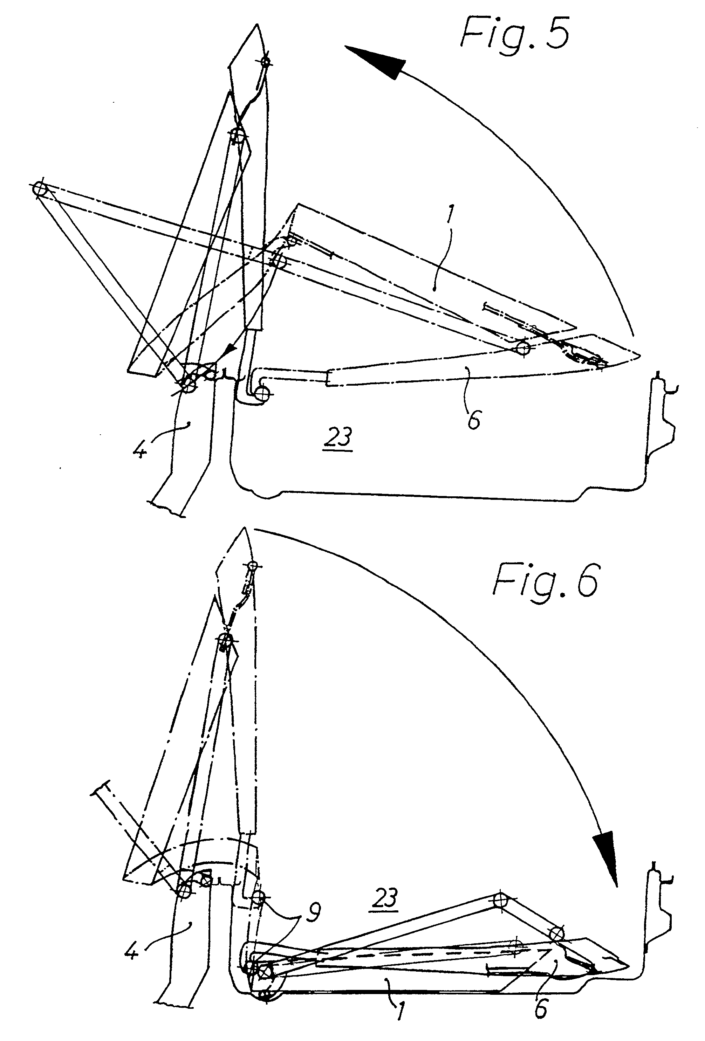

In Schließstellung des Faltverdecks ist die obere Öffnung des Aufnahmefaches von einem nicht dargestellten Deckel abgedeckt. Damit das Faltverdeck mit seinem Verdeckgestänge, der Spannbügel 6 und die Heckscheibe 1 in das Aufnahmefach eingebracht werden können, ist der Spannbügel 6 gemäß Fig. 5 aus seiner bei geschlossenem Verdeck etwa horizontalen, strichpunktiert dargestellten Lage in Richtung des Pfeiles nach oben in die durch ausgezogene Linien gekennzeichnete Stellung zu schwenken. In dieser Lage des Spannbügels 6 ist der nicht dargestellte Deckel um eine hintere Querachse nach oben schwenkbar.

Gemäß Fig. 6 läßt sich nun das zusammengeklappte Faltverdeck mit seinem Verdeckgestänge, dem Spannbügel 6 und der Heckscheibe 1 in Pfeilrichtung in das offene Aufnahmefach 23 in die durch ausgezogene Linien dargestellte Lage einbringen. Beim Einschwenken in das Aufnahmefach 23 wird die Achse 9 des Spannbügels 6 nach unten in das Aufnahmefach 23 verlagert. Hierzu ist die Achse 9 an einem im Aufnahmefach 23 gegenüber der Karosserie des Fahrzeugs höhenverstellbaren Stellglied ausgebildet, das die Achse 9 beim Schließen des Faltverdecks nach oben und beim Öffnen des Faltverdecks nach unten in das Aufnahmefach verlagert. Durch die Verlagerung der Achse 9 nach unten beim Einbringen des Faltverdecks in das Aufnahmefach wird der Innenraum des Aufnahmefaches 23 bestmöglich ausgenutzt. Selbstverständlich könnte die Achse 9 des Spannbügels 6 karosseriefest angeordnet sein. Ebenso ist es auch möglich, daß die Heckscheibe nicht an dem Spannbügel sondern an einem anderen Bauteil schwenkbar angelenkt ist.

## Patentansprüche

1. Versenkbares Faltverdeck eines Kraftfahrzeugs, das an einer Recköffnung eine Heckscheibe aufweist, die in ein hinteres Aufnahmefach einschwenkt, wenn sich eine die Heckscheibe stützende Strebe beim Einbringen des Faltverdecks in den Aufnahmeraum verlagert, dadurch gekennzeichnet, daß die Heckscheibe (1) in Schließstellung des Faltverdecks (2) vor die Recköffnung (3) geschwenkt an dem Randbereich der Recköffnung (3) von innen anliegt und die Strebe ein am Verdeckgestänge (Spannstange 12, 13) des Faltverdecks (2) befestigter Querbügel (10) ist, der in Schließstellung des Faltverdecks (2) von innen an der Heckscheibe (1) anliegt und die Heckscheibe (1) gegen den inneren Randbereich der Recköffnung (3) belastet.

2. Versenkbares Faltverdeck nach Anspruch 1, dadurch gekennzeichnet, daß der Querbügel (10) der Form der Heckscheibe (1) angepaßt ist und die Heckscheibe (1) in Schließstellung des Faltenverdecks (2) über annähernd ihre gesamte Breite stützt.

3. Versenkbares Faltverdeck nach Anspruch 1, mit einer in ihrem hinteren Bereich um eine Querachse schwenkbaren Heckscheibe, dadurch gekennzeichnet, daß der Querbügel (10) im vorderen Bereich an der Heckscheibe (1) anliegt.

4. Versenkbares Faltverdeck nach Anspruch 1, dadurch gekennzeichnet, daß der Querbügel (10) mit seinen seitlichen Enden jeweils an dem hinteren Bereich einer vorderen Spannstange (12) befestigt ist, die mit einer hinteren Spannstange (13) gelenkig verbunden ist und zusammen mit dieser Spannstange (13) einen Übertotpunktmechanismus zum Spannen des Faltverdecks (2) bildet.

5. Versenkbares Faltverdeck nach Anspruch 3, dadurch gekennzeichnet, daß die Querachse (5) an dem Steg eines U-förmigen Spannbügels (6) ausgebildet ist, der mit dem hinteren unteren Bereich des Faltverdecks (2) verbunden ist und in den Endbereichen seiner in Schließstellung nach vorne gerichteten Schenkeln (8) um eine karosseriefeste, in Querrichtung verlaufende Achse (9) nach oben schwenkbar ist.

6. Versenkbares Faltverdeck nach Anspruch 4 und 5, dadurch gekennzeichnet, daß die jeweils seitlich gegenüberliegenden vorderen und hinteren Spannstangen (12, 13), sowie die Schenkel (8) des Spannbügels (6) im Schwenkbereich der Heckscheibe (1) einen größeren seitlichen Abstand als die seitlichen Ränder der Heckscheibe (1) aufweisen und das jeweils hintere Ende der hinteren Spannstangen (13) um eine im Stegbereich quer verlaufende Drehachse (16) schwenkbar an dem Spannbügel (6) angelenkt ist.

7. Versenkbares Faltverdeck nach Anspruch 1, dadurch gekennzeichnet, daß der Querbügel (10) in Schließstellung des Faltverdecks (2) in einer in Querrichtung etwa senkrecht zur Heckscheibe (1) verlaufenden Ebene angeordnet ist.

8. Versenkbares Faltverdeck nach Anspruch 7, dadurch gekennzeichnet, daß in den beiden Seitenbereichen der Heckscheibe (1) auf dem Querbügel (10) drehbare Rollen (17) angeordnet sind, auf denen sich die Heckscheibe (1) beim Einschwenken in das Aufnahmefach (23) abstützt.

9. Versenkbares Faltverdeck nach Anspruch 1, dadurch gekennzeichnet, daß der Querbügel (10) in Schließstellung des Faltverdecks (2) an einem Rahmen (18) der Heckscheibe (1) anliegt.

10. Versenkbares Faltverdeck nach Anspruch 7 und 9, dadurch gekennzeichnet, daß der Rahmen (18) eine nach innen vorstehende elastische Zunge (19) aufweist, die in Schließstellung des Faltverdecks (2) im vorderen oberen Bereich an dem Querbügel (10) anliegt.

11. Versenkbares Faltverdeck nach Anspruch 9, dadurch gekennzeichnet, daß mit dem Rand der Recköffnung (3) eine äußere und/oder mit dem Rahmen (18) eine innere, jeweils umlaufende elastische Dichtlippe (20, 20') verbunden ist, wobei die äußere Dichtlippe (20) von außen mit der Heckscheibe (1) und die innere Dichtlippe (20') von innen mit dem Stoff des Faltverdecks (2) zusammenwirkt.

EP 0 332 812 B1

12. Versenkbares Faltverdeck nach Anspruch 11, dadurch gekennzeichnet, daß die innere Dichtlippe (20') einen nach oben offenen Wasserablaufkanal (21) bildet.

13. Versenkbares Faltverdeck nach Anspruch 5, mit einer Heckscheibe aus Glas, dadurch gekennzeichnet, daß die Heckscheibe (1) mit Heizdrähten versehen und an stromleitenden Tragarmen (7) befestigt ist, die mit den Heizdrähten und einer Spannungsquelle einen Stromkreis bilden.

14. Versenkbares Faltverdeck nach Anspruch 5, dadurch gekennzeichnet, daß die Achse (9) an einem im Aufnahmefach (23) gegenüber der Karosserie des Fahrzeugs höhenverstellbaren Stellglied ausgebildet ist, das die Achse (9) beim Schließen des Faltverdecks (2) nach oben und beim Öffnen des Faltverdecks nach unten in das Aufnahmefach (23) verlagert.

## Claims

1. A collapsible folding top for a motor vehicle and comprising a rear window in a rear opening and pivoting into a rear receiving compartment when a strut supporting the rear window is moved into the receiving chamber during retraction of the folding top, characterised in that, when the folding top (2) is in the closed position, the rear window (1) is pivoted in front of the rear opening (3) and internally abuts the edge region of the rear opening (3), and the strut is a transverse member (10) secured to the rods (tie rods 12, 13) of the folding top (2), and when the folding top (2) is in the closed position the transverse member internally abuts the rear window (1) and biases the rear window (1) against the inner edge region of the rear opening (3).

2. A collapsible folding top according to claim 1, characterised in that the transverse member (10) is adapted to the shape of the rear window (1) and, when the folding top (2) is in the closed position, supports the rear window (1) over approximately its entire width.

3. A collapsible folding top according to claim 1, comprising a rear window pivotable around a transverse shaft in its rear region, characterised in that the transverse member (10) abuts the rear window (1) in the front region.

4. A collapsible folding top according to claim 1, characterised in that each end of the transverse member (10) is secured to the rear region of a front tie rod (12) which is pivotably connected to a rear tie rod (13) and cooperates therewith to form an over dead-centre mechanism for clamping the folding top (2).

5. A collapsible folding top according to claim 3, characterised in that the transverse shaft (5) is formed on the web of a U-shaped clamp (6) which is connected to the rear lower region of the folding top (2) and has arms (8) which extend forwards when in the closed position, the end regions of the arms being pivotable upwards around a shaft (9) secured to the vehicle body and movable in the transverse direction.

6. A collapsible folding top according to claim 4 or 5, characterised in that the laterally-opposite front and rear tie rods (12, 13) and the arms (8) of the clamp (6) are separated by a greater lateral distance than the lateral edges of the rear window (1) in the pivoting range of the rear window (1), and the rear end of each rear tie rod (13) is secured to the clamp (6) so as to be pivotable around an axis (16) extending transversely in the web region.

7. A collapsible folding top according to claim 1, characterised in that, when the folding top (2) is in the closed position, the transverse member (10) is disposed in a plane extending in the transverse direction approximately at right angles to the rear window (1).

8. A collapsible folding top according to claim 7, characterised in that rotatable rollers (17) are disposed on the transverse member (10) in both side regions of the rear window (1), and the rear window (1) rests on the rollers when pivoting into the receiving compartment (23).

9. A collapsible folding top according to claim 1, characterised in that, when the folding top (2) is in the closed position, the transverse member (10) abuts a frame (18) of the rear window (1).

10. A collapsible folding top according to claims 7 and 9, characterised in that the frame (18) has an inwardly projecting resilient tongue (19) which abuts the transverse member (10) in the front upper region when the folding top (2) is in the closed position.

11. A collapsible folding top according to claim 9, characterised in that an outer peripheral resilient sealing lip (20) is connected to the edge of the rear opening (3) and/or an inner peripheral resilient sealing lip (20') is connected to the frame (18), the outer sealing lip (20) cooperating externally with the rear window (1) and the inner sealing lip (20') co-operating internally with the material of the folding top (2).

12. A collapsible folding top according to claim 11, characterised in that the inner sealing lip (20') forms an upwardly-open water drainage duct (21).

13. A collapsible folding top according to claim 5, comprising a rear glass window, characterised in that the rear window (1) is provided with heating wires and is secured to electrically-conductive supporting arms (7) which co-operate with the heating wires and a voltage source to form an electric circuit.

14. A collapsible folding top according to claim 5, characterised in that the shaft (9) is formed on a final control element which is vertically adjustable relative to the vehicle body in the receiving compartment (23), and which moves shaft (9) upwards when the folding top (2) isclosed and moves it downwards into the receiving compartment (23) when the folding top is opened.

## Revendications

1. Toit pliant escamotable pour véhicule automobile, qui présente sur une ouverture arrière une glace arrière, qui bascule dans un compartiment arrière de réception, quand une jambe soutenant la glace arrière se déplace lors de la mise en oeuvre du toit dans le logement de réception, caractérisé en ce que la glace arrière (1) quand le toit pliant (2) est en position fermée se trouve basculé de l'intérieur en avant de l'ouverture arrière (3) et adhère sur le pourtour de l'ouverture arrière (3) et la jambe est un étrier transversal (10) fixé à la timonerie de toit (tirants de tension 12, 13) du toit pliant (2), qui dans la position fermée du toit pliant (2) repose de l'intérieur sur la glace arrière (1) et la glace arrière (1) appuie contre le pourtour intérieur de l'ouverture arrière (3).

2. Toit pliant escamotable selon la revendication 1, caractérisé en ce que l'étrier transversal (10) est adapté à la forme de la glace arrière (1) et la glace arrière (1) dans la position formée du toit pliant (2) porte sur presque toute sa largeur.

3. Toit pliant escamotable selon la revendication 1, avec une glace arrière basculant dans sa zone arrière sur un axe transversal, caractérisé en ce que l'étrier transversal (10) repose dans la zone avant sur la glace arrière (1).

4. Toit pliant escamotable selon la revendication 1, caractérisé en ce que l'étrier transversal (10) est relié par chacune de ses extrémités latérales à la zone arrière d'un tirant de tension antérieur (12), qui est relié de façon articulée à un tirant de tension postérieur (13) et constitue avec ce tirant de tension (13) un mécanisme à dépassement de point mort servant à tendre le toit pliant (2).

5. Toit pliant escamotable selon la revendication 3, caractérisé en ce que l'axe transversal (5) est situé sur le passage d'un étrier de tension (6) en forme d'U, qui est relié à la zone arrière inférieure du toit pliant (2) et peut pivoter vers le haut autour d'un axe (9) fixé à la carrosserie s'étendant dans le sens transversal aux extrémités de ses branches (8) dirigées vers l'avant en position de fermeture.

6. Toit pliant escamotable selon les revendications 4 et 5, caractérisé en ce que, chacun des tirants de tension (12, 13) avant et arrière se faisant latéralement vis-à-vis, ainsi que les branches (8) de l'étrier de tension (6) présentent dans la zone de basculement de la glace arrière (1) un écartement latéral plus grand que les bords latéraux de la glace arrière (1) et chaque extrémité arrière de tirants arrière de tension (13) est monté de façon articulée sur l'étrier de tension (6) de façon à pouvoir pivoter autour d'un axe de rotation (16) s'étendant en travers de la zone de passage.

7. Toit pliant escamotable selon la revendication 1, caractérisé en ce que, l'étrier transversal (10) en position de fermeture du toit pliant (2) est disposé dans un plan s'étendant dans le sens transversal sensiblement perpendiculairement à la glace arrière (1).

8. Toit pliant escamotable selon la revendication 7, caractérisé en ce que dans les deux zones latérales de la glace arrière (1) des galets (17) pouvant tourner sont disposés sur l'étrier transversal (10), galets sur lesquels la glace arrière (1) s'appuie lors du basculement dans le compartiment de réception (23).

9. Toit pliant escamotable selon la revendication 1, caractérisé en ce que l'étrier transversal (10) en position de fermeture du toit pliant (2) repose sur un cadre (18) de la glace arrière (1).

10. Toit pliant escamotable selon les revendications 7 et 9, caractérisé en ce que le cadre (18) présente une languette élastique (19) saillant vers l'intérieur, qui en position de fermeture du toit pliant (2) repose dans la zone avant supérieure sur l'étrier transversal (10).

11. Toit pliant escamotable selon la revendication 9, caractérisé en ce que des joints d'étanchéité élastiques faisant le tour (20, 20') sont fixés chacun l'un extérieur au bord de l'ouverture arrière (3) et/ou l'autre intérieur au cadre (18), le joint d'étanchéité extérieur (20) coopère de l'extérieur avec la glace arrière (1) et le joint d'étanchéité intérieur (20') coopère de l'intérieur avec la matière du toit pliant (2).

12. Toit pliant escamotable selon la revendication 11, caractérisé en ce que le joint d'étanchéité intérieur (20') forme un canal d'évacuation d'eau (21) ouvert vers le haut.

13. Toit pliant escamotable selon la revendication 5, avec une glace arrière en verre, caractérisé en ce que la glace arrière (1) est pourvue de filaments de chauffage et est reliée à des bras supports (7) conduisant le courant, bras qui forment un circuit électrique avec les filaments de chauffage et une source de courant.

14. Toit pliant escamotable selon la revendication 5, caractérisé en ce que l'axe (9) est monté sur un organe de positionnement réglable en hauteur dans le compartiment de réception (23) par rapport à la carrosserie du véhicule, organe qui déplace l'axe (9) vers le haut lors de la fermeture du toit pliant (2) et lors de l'ouverture du toit pliant vers le bas dans le compartiment de réception (23).

## Fig.1

## Fig.2

Fig.3

Fig.4

*Fig.5*

1

23

6

4

*Fig.6*

9

23

4

1

6